(19) Europäisches Patentamt / European Patent Office / Office européen des brevets

(11) **EP 3 051 616 A1**

(12) **DEMANDE DE BREVET EUROPEEN**

(43) Date de publication:
03.08.2016 Bulletin 2016/31

(51) Int Cl.:
*H01M 8/04* (2006.01)  *H01M 8/10* (2006.01)

(21) Numéro de dépôt: **16152993.8**

(22) Date de dépôt: **27.01.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **28.01.2015 FR 1550653**

(71) Demandeur: **Commissariat à l'Énergie Atomique et aux Énergies Alternatives 75015 Paris (FR)**

(72) Inventeurs:
• **BIGARRE, Janick**
 **37000 TOURS (FR)**
• **GALIANO, Hervé**
 **37700 LA VILLE-AUX-DAMES (FR)**
• **BUVAT, Pierrick**
 **37250 MONTBAZON (FR)**
• **MARTEMIANOV, Serguei**
 **86180 BUXEROLLES (FR)**

(74) Mandataire: **Brevalex 95, rue d'Amsterdam 75378 Paris Cedex 8 (FR)**

(54) **PROCÉDÉ DE MESURE NON INVASIVE POUR LE CONTRÔLE DU FONCTIONNEMENT D'UNE PILE À COMBUSTIBLE À MEMBRANE**

(57) L'incention concerne un procédé de contrôle du fonctionnement d'une pile à combustible comportant au moins une membrane (2), comportant les étapes suivantes :
• mise en contact d'au moins deux moyens conducteurs (P1,P2), avec deux éléments de surface différents d'une même première plaque conductrice, ladite plaque pouvant être une plaque de distribution (50) appartenant à une première cellule (10),
• mesure d'une ou plusieurs tensions électriques, entre lesdits moyens conducteurs, reliés électriquement à un dispositif de mesure de tension électrique (200).

FIG.3b

EP 3 051 616 A1

**Description**

**DOMAINE TECHNIQUE**

L'invention porte sur un procédé de contrôle et d'optimisation, en temps réel, du fonctionnement d'une pile à combustible. L'invention concerne les domaines techniques utilisant une pile à combustible comme source d'énergie, moyen de stockage d'électricité, comme par exemple les transports, les systèmes de communication nomades (dispositifs électroniques portables), les systèmes de production d'énergie électrique stationnaire ou des systèmes de co-génération électrique/thermique pour l'habitat.

**ÉTAT DE LA TECHNIQUE ANTÉRIEURE**

Les piles à combustible à membrane du type PEMFC (Proton Exchange Membrane Fuel Cell) ou DMFC (Direct Methanol Fuel Cell) connaissent actuellement un développement rapide du fait de leur potentielle très prometteur dans les domaines cités ci-dessus.

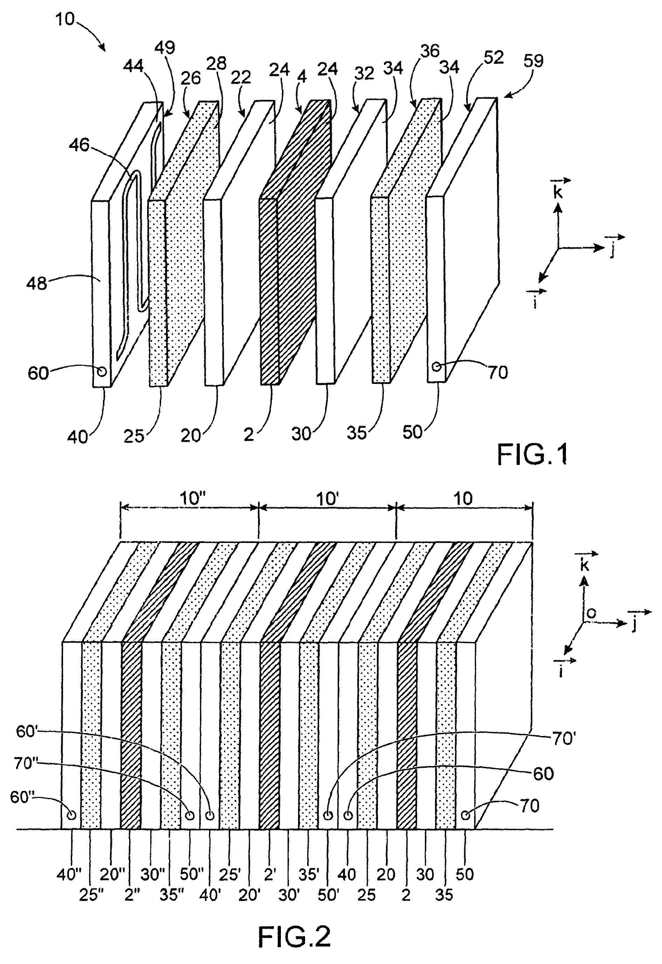

Le principe de fonctionnement d'une pile à combustible à membrane, ou pile, est basé sur une réaction d'oxydation et une réaction de réduction. Ces deux réactions chimiques sont complémentaires et réalisées simultanément de part et d'autre d'une membrane échangeuse de protons ou électrolyte 2 (figure 1). Les noms des piles à combustible à membrane sont généralement liés à la nature de l'élément oxydé : méthanol pour les piles de type DMFC, hydrogène pour les piles de type PEMFC. Le fonctionnement d'une pile de type PEMFC est basé sur l'oxydation d'un combustible ou gaz réactif, comportant de l'hydrogène, au contact d'une plaque ou surface 20, comportant un ou plusieurs matériaux catalyseurs, comme par exemple du platine. L'hydrogène, au contact de cette électrode ou anode 20, s'oxyde selon la réaction suivante :

$$2H_2 \rightarrow 4H^+ + 4e^- \qquad (1)$$

Les produits de cette réaction sont séparés au niveau de l'anode 20. Les électrons diffusent à travers une couche de diffusion 25, avant de rejoindre la surface 44 de la plaque de distribution 40. Cette plaque de distribution comporte à sa surface, un ou plusieurs canaux, ouverts et parallèles à la surface 22 de l'anode 20. Ce canal ou ces canaux permettent la circulation du combustible entre la plaque de distribution 40, la couche de diffusion 25, l'anode 20 et la membrane 2. Le combustible est introduit dans le canal 46 par une ouverture ou embouchure 49 et ressort par une ouverture 60. Les ouvertures sont situées sur la face de la plaque de distribution 40, située à l'opposé de la face 44 comportant ledit canal.

Pour que la réaction 1 ne s'interrompe pas, le combustible est introduit continuellement dans le canal 46, à une pression pouvant être comprise entre 1 et 4 bars absolus, et une température généralement comprise entre 60°C et 80°C. Afin de garantir un apport suffisant en gaz et une évacuation suffisante de l'eau, le gaz est introduit dans la cellule avec une légère sur-stoechiométrie, comprise par exemple entre 1,2 et 1,5. Les ions $H^+$ ou protons, diffusent à travers la membrane, membrane échangeuse de protons ou électrolyte 2, jusqu'à atteindre la surface d'une cathode 30. La membrane est par contre imperméable aux combustibles introduits du côté de l'anode et de la cathode pour éviter qu'ils ne réagissent directement ensemble. La membrane peut être composée d'une ou de plusieurs couches contenant, par exemple, des hydrocarbures perfluorés (PFC) sulfonés.

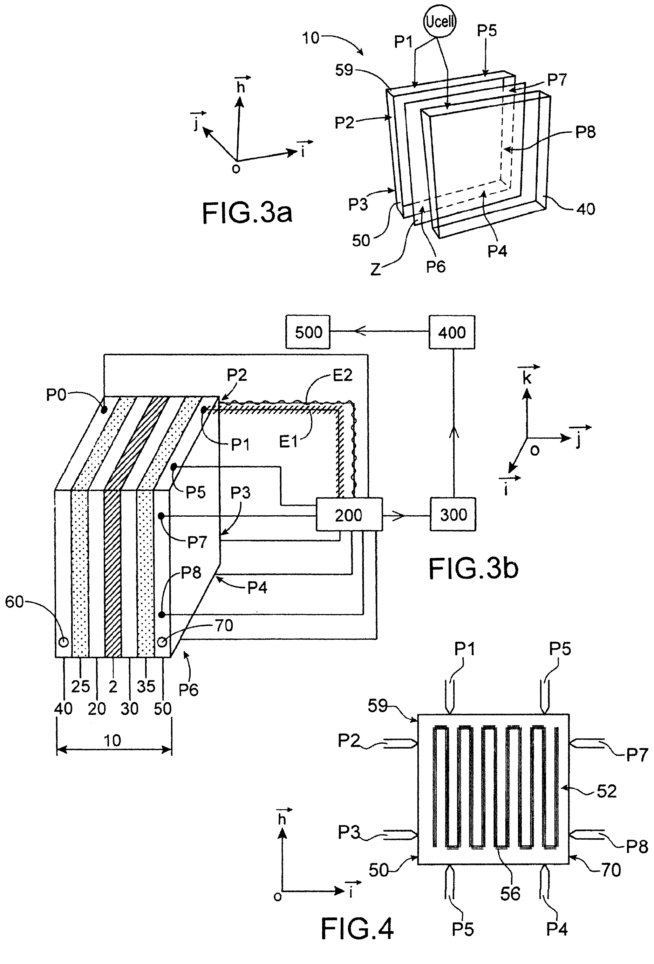

Une seconde couche de diffusion 35 est intercalée entre la cathode 30 et une plaque de distribution 50. Cette plaque de distribution comporte à sa surface 52, un ou plusieurs canaux 56, similaire(s) au canal 46, c'est-à-dire, ouvert(s) et parallèle(s) ou sensiblement parallèle(s) à la surface 34 de la cathode 30 (figure 4). La plaque de distribution 50 est reliée à la plaque de diffusion 40 par un ou plusieurs éléments conducteurs, non représentés sur les figures, pour permettre la circulation des électrons, produits par la réaction 1, de la plaque de distribution 40 vers la plaque de distribution 50 et de la plaque de distribution 50 vers la cathode 30. La circulation des électrons de l'anode 20 vers la cathode 30, couplée au potentiel électrochimique qui apparaît entre les deux plaques de distribution, permettent à la pile de délivrer, en fonction des conditions de fonctionnement, une puissance électrique comprise entre 0,5 et 1,5 W/cm$^2$. Le canal 56 comporte deux ouvertures, situées généralement, sur une face de la face 52 sur laquelle se situe ledit canal. Un second gaz réactif, comportant de l'oxygène, circule de façon continue dans le canal 56 pour que le fonctionnement de la pile ne soit pas interrompu, à une pression pouvant être comprise entre 1 et 4 Bars absolus et une température entre 60 et 80°C. Afin de garantir un apport suffisant en gaz et une évacuation suffisante de l'eau produite à la cathode, le gaz est introduit dans la cellule avec une légère sur-stoechiométrie, comprise par exemple entre 1,5 et 2,0.

L'oxygène et les électrons, au contact de la plaque ou surface 30, recouverte d'un ou de plusieurs matériaux catalyseurs, par exemple du platine, réagissent avec les protons, $H^+$, selon la réaction de réduction suivante :

$$4H^+ + 2O + 4e^- \rightarrow 2H_2O \qquad (2)$$

La réaction 2, s'effectuant à la surface de la cathode 30, produit de l'eau, évacuée de la pile, par l'intermédiaire du gaz circulant dans le canal 56.

Les éléments, ci-dessus, peuvent être assemblés, selon la figure 2, pour former un coeur de pile ou cellule 10. La cellule peut être composée des éléments 40, 25, 20, 2, 30, 35 et 50 disposés selon l'axe $\vec{j}$ dans cet ordre. Il est possible d'associer plusieurs « cellules » ensemble, en reproduisant l'ordre d'assemblage précédent. Sur la figure 2 est représentée une pile à combustible composée de trois coeurs : 10, 10' et 10". Les plaques de distribution 40 et 50', 40' et 50" peuvent être jointes ou fabriquées, de façon à former une seule plaque de distribution, dite plaque bipolaire de distribution. Les canaux, situés sur les faces opposées d'une plaque bipolaire de distribution, ne communiquent pas entre eux et sont étanches, chaque coeur de pile est ainsi isolé du ou des coeurs adjacents. La plaque bipolaire de distribution peut avoir une épaisseur comprise entre 300 μm et 3 mm selon l'axe $\vec{j}$.

Une fois la pile à combustible assemblée ou montée, elle peut être mise en marche en introduisant, dans chaque compartiment de pile, les combustibles dans les canaux situés aux interfaces plaque de distribution/couche de diffusion. Pour une pile à combustible de type PEMFC, le combustible introduit entre la plaque de distribution 40 et la couche de diffusion 25, est un gaz composé d'hydrogène sous pression, le combustible introduit entre la plaque de distribution 50 et la couche de diffusion 35, est un gaz à base d'oxygène ou d'air pressurisé. Les combustibles permettent le démarrage et l'entretien des réactions d'oxydoréduction qui s'opèrent dans la pile. C'est pour cette raison qu'ils sont introduits continuellement dans la pile. Les surfaces où se produisent les réactions d'oxydoréduction 1 et 2, sont appelées surfaces actives ou zones actives. Les surfaces ou les zones sont dites mortes lorsqu'aucune des réactions précédentes ne se passe. La puissance de la pile dépend de la proportion de surface active.

Les piles à combustibles peuvent être de différentes formes : circulaire, ovale, rectangulaire, carré ou autre. Pour fonctionner de manière optimale, une PEMFC réunit différentes conditions parfois opposées. En premier lieu, la température de fonctionnement est la plus élevée possible, tout en maintenant une hydratation suffisante, pour que les protons puissent diffuser à travers la membrane 2. La perméabilité aux protons ou la conductivité protonique de la membrane est un des facteurs limitant de la réaction 2. A partir de 60°C, la membrane a tendance à se dessécher, principalement au niveau de l'entrée des canaux 46 et 56, sous l'effet conjugué de la température et du débit de gaz réactif. Ce phénomène d'assèchement crée des zones ou surfaces mortes. Pour maintenir la membrane humide et donc une proportion de surface active importante, les gaz réactifs peuvent être hydratés, via un dispositif externe. Cette technique permet un fonctionnement correct de la pile, sous air, jusqu'à 80°C. La pression des gaz est également un paramètre favorisant une bonne hydratation de la membrane mais cela signifie l'utilisation d'un compresseur d'air qui consomme une quantité importante d'énergie et diminue de ce fait, le rendement global de la pile.

En second lieu, pour que les réactions électrochimiques s'effectuent de façon continue, on cherche à ce que les combustibles soient en contact avec le catalyseur présent à la surface des électrodes. Or, une hydratation trop importante du coeur de la pile peut entrainer une accumulation de l'eau dans les pores et à la surface des électrodes et des couches de diffusion. L'eau, sous forme liquide, est plus ou moins perméable aux gaz réactifs, limitant ou stoppant les réactions électrochimiques 1 et 2 dans la cellule. La proportion de zones mortes augmente alors, entraînant une chute rapide et quasi-irréversible de tension de la cellule, à fort débit de courant. On parle alors du phénomène de noyage de la pile. Afin d'éviter ce phénomène, l'eau est évacuée régulièrement, par l'intermédiaire des gaz réactifs circulant dans le ou les canaux situés à l'interface plaque de distribution/couche de diffusion, ou par d'autres moyens, notamment par des purges de la cellule. C'est pour cette raison que, généralement, le débit de gaz d'un combustible est supérieur ou inférieur, à la quantité de gaz nécessaire pour les réactions électrochimiques 1 et 2. Le rapport entre le débit de gaz introduit dans chaque compartiment et le débit de gaz nécessaire à la réaction est défini par le coefficient λ. Ce coefficient à une valeur habituellement comprise entre 1,5 et 2,0 pour une pile de type PEMFC, côté air et 1,2 à 1,4 côté hydrogène. Il est néanmoins plus intéressant d'avoir une valeur de λ la plus proche de 1 pour économiser les combustibles.

Compte tenu de la nature des membranes actuellement commercialisées, ces dernières ont besoins d'être fortement hydratées pour fonctionner correctement. Or, la température de fonctionnement de la pile et les débits des combustibles dans le coeur de la pile, favorisent la déshydratation de la membrane. La puissance délivrée chute alors. Pour humidifier la membrane, les gaz réactifs sont généralement hydratés, avant leur introduction dans la pile (« Exprimental analysis of the effects of the operating variables on the performance of a single PEMFC », M.G. Santarelli and M.F. Torchio, Energy Conversion and Management 48 (2007) 40-51). Inversement, si le flux de gaz n'est pas suffisant, l'eau générée à la cathode s'accumule au niveau des électrodes et finit par les noyer. La puissance chute alors très rapidement puisque les zones mortes deviennent majoritaires par rapport aux zones actives. C'est donc la gestion de l'eau qui permet d'assurer le bon fonctionnement d'une pile de type PEMFC. Le réglage optimum d'une pile résulte d'un compromis permanent entre un assèchement de la membrane et le noyage des électrodes; autrement dit, il s'agit de déterminer en temps réel la meilleure proportion entre les zones actives et les zones mortes (« A review on water balance in the membrane electrode assembly of proton exchange membrane fuel cells », W. Dai, H. Wang, X. Yuan, J. J. Martin, D. Yang, J. Qiao and J. Ma, Int J Hydrogen Energy 2009; 32 : 9461-9478). C'est pour cette raison que de nombreuses techniques de diagnostique du phénomène de dessèchement et/ou de noyage d'une pile à membrane à combustible, ont été développées, dont quelques exemples sont présentés ci-après.

Les méthodes de détection de noyage des électrodes (« waterflooding ») sont nombreuses. L'information relative à la présence d'eau peut être obtenue grâce à la méthode d'interruption du courant ou de mesures de l'impédance (US 2004/0091759, US 2005/0287402, US 2006/0074574, US 2006/0083961, US 2010/0286939, US 2014/0186734). La méthode d'interruption du courant est devenue conventionnelle, cependant elle donne uniquement une information globale. De plus, la méthode de l'impédance est relativement coûteuse et difficile à interpréter.

D'autres méthodes comparent des mesures d'une ou de plusieurs caractéristiques électriques, d'une cellule ou d'un stack, avec des valeurs de référence, comme par exemple les mesures du potentiel électrique d'une ou de plusieurs cellules, les différences de ces potentiels, les relations entre ces potentiels, etc. En fonction des différences entre les mesures et les valeurs de référence, des actions ou des réponses transitoires sont mises en oeuvre pour assurer un bon fonctionnement de la pile. Par exemple, dans le document US 6 762 587, deux modèles électriques équivalents (statique et dynamique), sont utilisés pour établir un diagnostic de l'état de la pile. Les mesures du potentiel électrique (valeur moyenne) et de ces variations temporelles (écart type) sont réalisées simultanément pour diagnostiquer, l'engorgement des sites catalytiques par l'eau ou le séchage de la membrane. Les mesures de la courbe courant/tension dans les conditions non stationnaires (interruption du courant, par exemple) sont proposées comme moyen de diagnostic dans US 2006/0051628. L'utilisation de ces méthodes électriques est relativement simple, cependant elles permettent seulement une caractérisation globale des cellules, sans tenir compte de l'existence des défauts locaux. La prédictivité de ces méthodes globales reste donc limitée.

Une autre méthode est basée sur des mesures de distribution de courants électriques, à travers une surface active d'une pile. Différentes modifications de cette méthode ont été proposées par la suite (US 2007/0279051; EP 1 755 188). L'inconvénient principal de ces techniques, est la nécessité d'utiliser une cellule de configuration spécifique, coûteuse et difficile à mettre en oeuvre dans le cadre d'applications industrielles.

Il n'existe actuellement pas de technique, non invasive et simple à mettre en oeuvre sur une pile à combustible en fonctionnement réel, sans modification de sa structure, permettant d'identifier localement le ou les phénomènes responsables de la chute de tension et de déterminer leurs origines. L'invention, ici présentée, a pour objet de répondre à cette attente.

**EXPOSÉ DE L'INVENTION**

L'invention concerne un procédé de contrôle du fonctionnement d'une pile à combustible à membrane ou pile, composée d'une ou de plusieurs cellules.

Une cellule ou un coeur de pile peut être composé d'une membrane placée entre deux électrodes. Les deux électrodes sont placées entre deux plaques de distribution qui peuvent délimiter ladite cellule. Un ou plusieurs éléments peuvent être interposés entre les deux plaques de distribution. Notamment, une couche de diffusion peut être placée entre une électrode et une plaque de distribution. La plaque de distribution alimente en gaz réactifs la cellule et/ou élimine les produits des réactions électrochimiques se produisant dans ladite cellule. Elle collecte également les électrons générés à l'anode et apporte les électrons nécessaires à la réaction électrochimique à la cathode.

Selon l'invention, les étapes d'un procédé de contrôle du fonctionnement d'une pile peuvent être les suivantes :

- mise en contact d'au moins deux moyens conducteurs, avec deux éléments de surface différents d'une même première plaque conductrice, ladite première plaque pouvant être une plaque de distribution appartenant à une première cellule,
- mesure de plusieurs tensions électriques, entre lesdits moyens conducteurs, reliés électriquement à un dispositif de mesure de tension électrique.

Les moyens conducteurs sont mis au contact d'élément de surface de la plaque pour sonder ou mesurer, la différence de potentiel entre des éléments de surface différents de ladite plaque. Notamment, ces moyens conducteurs peuvent être des pointes formées dans un matériau conducteur. Les moyens conducteurs peuvent être reliés électriquement par l'intermédiaire de pistes, de tiges, de câbles électriques ou autre, à un dispositif de mesure de tension électrique.

Un des moyens conducteurs peut être en contact avec le même élément de surface d'une plaque conductrice, pendant qu'un second moyen conducteur est mis en contact, successivement, d'un ou de plusieurs éléments de surface différents de ladite plaque. Les tensions peuvent être mesurées entre les deux moyens conducteurs, lorsque les moyens conducteurs sont en contact avec des éléments de surface différents.

Les mesures de tension peuvent être réalisées sur au moins deux plaques conductrices différentes composant la pile. Ces mesures peuvent être par exemple faites sur une première plaque, puis sur une seconde plaque, ou bien en même temps sur lesdites plaques.

Les moyens conducteurs peuvent être mis en contact d'une plaque conductrice comportant au moins, sur une de ses faces, un canal de distribution des gaz réactifs et/ou de récupération des produits de la pile. De préférence, les moyens conducteurs sont placés au voisinage, ou au plus près, du ou des canaux de distribution et/ou de récupération.

Les mesures de tension électrique peuvent être réalisées en tension ou en courant continu ou modulé à différentes fréquences. Une ou plusieurs tensions peuvent être mesurées en fonction de la densité de courant dans la ou les cellules de la pile.

Un opérateur et/ou un dispositif automatique, par exemple un ordinateur, peut modifier, en fonction d'une valeur ou de plusieurs valeurs des mesures précédentes, au moins un paramètre de fonctionnement de la pile, afin d'augmenter ou de diminuer la puissance de ladite pile.

L'invention concerne également un dispositif de contrôle du fonctionnement d'une pile à combustible. La pile à combustible comporte au moins une cellule composée d'une membrane, de deux électrodes, de deux plaques de distribution avec au moins sur une de leurs faces un canal de distribution des gaz combustibles et/ou un canal de récupération des produits des réactions électrochimiques réalisées dans la cellule, et au moins une première plaque conductrice qui peut éventuellement être une ou les deux dites plaques de distribution; au moins deux moyens conducteurs sont en contact, ou destinés à, ou prévus pour, être en contact, avec deux éléments de surface différents de la même première plaque conductrice.

Selon une alternative, au moins deux plaques conductrices différentes composant la pile, peuvent comporter au moins deux moyens conducteurs en contact ou destinés à, ou prévus pour, être en contact, avec une première plaque et au moins un autre moyen conducteur en contact ou destinés à, ou prévus pour, être en contact, avec une seconde plaque.

Selon une variante des dispositifs précédents, lesdits moyens conducteurs sont placés au voisinage, ou près, ou plus près, du ou des canaux de distribution et/ou de récupération.

Les moyens conducteurs peuvent être reliés, ou prévus pour être reliés, électriquement à un dispositif de mesure de tension pour mesurer une ou plusieurs tensions électriques entre lesdits moyens conducteurs. Les mesures sont éventuellement communiquées par des moyens formant une interface électronique à un ordinateur et/ou un opérateur.

Les mesures de tension précédentes peuvent être réalisées en tension continue et/ou en en courant modulé à différentes fréquences, ou bien en fonction de la densité de courant dans la ou les cellules de la pile.

L'un des dispositifs précédents peut comporter un dispositif de contrôle du fonctionnement de la pile à combustible qui peut modifier au moins un paramètre de fonctionnement de la pile, pour augmenter ou diminuer la puissance de ladite pile, en fonction d'une ou de plusieurs tensions mesurées.

## BRÈVE DESCRIPTION DES DESSINS

La figure 1 représente, en perspective, les éléments pouvant composer une cellule d'une pile à combustible à membrane.

La figure 2 représente une pile comportant plusieurs cellules dont les éléments sont assemblés.

Sur les figures 3a et 4, sont indiquées les positions possibles, des moyens conducteurs, sur les surfaces des plaques d'un pile à membrane pour mesurer les tensions électriques.

Sur la figure 3b, ces moyens conducteurs sont reliés à un dispositif de mesure de tension, qui est relié à une interface électronique en contact avec un opérateur qui peut modifier les paramètres de fonctionnement de la pile.

La figure 5 donne les mesures de tension entre les moyens conducteurs, en fonction du temps et de la valeur de $\lambda$.

La figure 6 donne les mesures de tension entre les moyens conducteurs avant, pendant et après le fonctionnement de la pile en mode bouché.

La figure 7 représente les courbes de polarisation d'une cellule d'une pile en fonction des tensions mesurées entre différents moyens conducteurs.

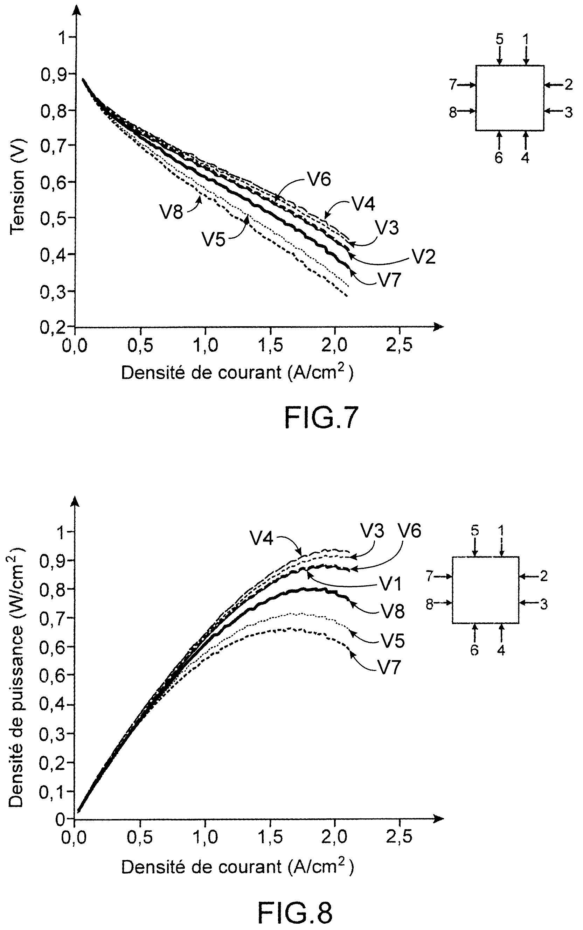

Les courbes de la figure 8 représentent la densité de puissance, entre plusieurs moyens conducteurs, en fonction de la densité de courant dans la cellule.

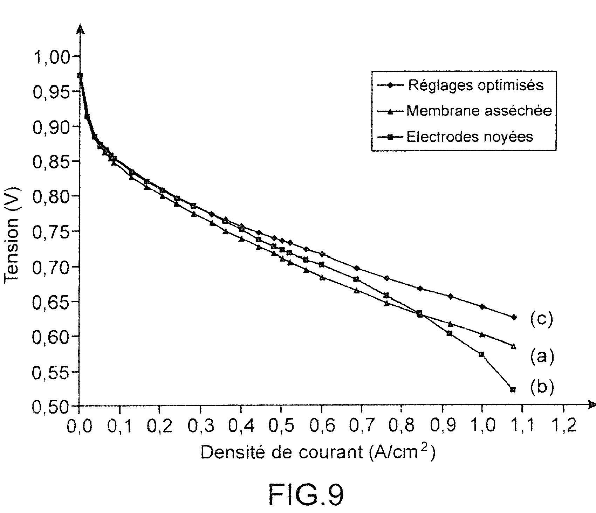

La figure 9 donne les mesures de polarisation d'une cellule en fonction de l'état de la pile.

## EXPOSÉ DÉTAILLÉ DE MODES DE RÉALISATION PARTICULIERS

L'invention a pour objet un procédé de mesure de tension électrique non invasif, pour contrôler et/ou optimiser le fonctionnement d'une pile à combustible. Ce procédé peut être mis en oeuvre sur tous types de pile à combustible ou pile, comportant une membrane placée entre deux plaques de distribution. Les plaques de distribution permettent d'alimenter la pile en combustible et d'évacuer les produits obtenus, sous formes de liquide et/ou de gaz. Les piles comportant une, ou plusieurs membranes, peuvent être du type « Proton Exchange Membrane Fuel Cell » (PEMFC) ou de type « Direct Methanol Fuel Cell » (DMFC) ou tout autre type de pile à combustible à membrane. Les exemples, ci-dessous, illustrent plusieurs procédés réalisés, selon l'invention, sur une pile de type PEMFC. Ils ne sont pas limitatifs et peuvent être transposés à d'autres types de pile à combustible à membrane.

Une pile à combustible ou pile, de type PEMFC, peut comporter au moins un coeur de pile ou une cellule 10, composée des éléments décrits précédemment 40, 25, 20, 2, 30, 35 et 50, selon l'axe $\vec{j}$ et cet ordre (figure 1). Les faces et les sections des éléments composant la pile, parallèles ou sensiblement parallèles au plan [O; $\vec{i}$ ; $\vec{k}$ ], peuvent être de dimensions similaires ou sensiblement similaires, de sorte que la ou les faces extérieures de la pile, faces perpendiculaires ou sensiblement perpendiculaires au plan [0; $\vec{i}$ ; $\vec{k}$ ], soient des surfaces régulières ou sensiblement régulières comme représentées sur la figure 2. La membrane est une membrane dont l'épaisseur est comprise entre 1 $\mu$m et 300 $\mu$m de préférence 20 $\mu$m.

Les électrodes 20 et 30 sont, de préférence, des couches poreuses, pouvant être réalisées à partir de matériaux carbonés Les électrodes comportent à leurs surfaces un matériau aux propriétés catalytiques. Dans l'exemple ici présenté, ce matériau est du platine. L'épaisseur de l'anode 20 et de la cathode 30 est comprise entre 1 $\mu$m et 200 $\mu$m, de préférence 20 $\mu$m.

Les couches de diffusion 25 et 35 peuvent être réalisées dans des matériaux poreux pouvant avoir une épaisseur comprise entre 5 $\mu$m et 500 $\mu$m, de préférence 200 $\mu$m.

Les surfaces des plaques de distribution, bipolaires ou non, en contact avec au moins une couche de diffusion, comportent au moins un canal, dont les extrémités sont situées sur une face libre des plaques de distribution. L'épaisseur des plaques de distribution est comprise entre 0,2 mm et 5 mm , de préférence de l'ordre de 3 mm. Les plaques de distribution sont conductrices, leur conductivité est supérieure à 10 S/cm , ou comprise entre 10 S/cm et 800 S/cm, de préférence entre 50 S/cm et 200 S/cm, pour pouvoir mesurer une variation de potentiel électrique sur un élément de surface de la plaque de distribution, de préférence positionné à la périphérie d'une face, lorsqu'une variation de tension électrostatique se produit sur un autre élément de surface, de préférence proche du centre d'une face. Les plaques de distribution utilisées dans cet exemple ont une conductivité surfacique d'environ 100 S/cm.

Après assemblage des éléments ci-dessus, la cellule 10 est mise en fonctionnement lors de l'introduction d'un premier gaz à base d'hydrogène dans le canal 46 situé à l'interface entre la plaque de distribution 40 et la couche de diffusion 25, et d'un second gaz à base d'oxygène dans le canal 56 en contact avec la couche de diffusion 35 et la plaque de distribution 50 (figure 1). Les deux gaz réactifs peuvent être introduits dans les canaux sous une pression de 2 bars absolus et à une température de 70°C. La pression, ainsi que la température, peuvent varier et être différentes entre les deux combustibles. Les gaz réactifs peuvent être introduits avec une pression comprise entre 1 et 4 bars, de préférence 2 bars, et une température comprise entre- 20 °C et 150 °C, de préférence entre 60 et 80°C.

Une première étape, selon l'invention, peut consister à mesurer la tension entre au moins deux surfaces ou éléments de surface appartenant à une même plaque conductrice, par exemple la plaque de distribution 40 ou la plaque de distribution 50. Cette étape est de préférence réalisée sur des piles en fonctionnent sans modification de leur structure. Pour cela, les mesures de tension sont faites sur les surfaces libres, de préférence latérales, de ladite plaque ou, surfaces non recouvertes par un autre matériau tel que la couche de diffusion 25 ou 35. Les mesures de tension sont avantageusement exécutées en fonction du temps, et enregistrées de manière à évaluer l'évolution temporelle desdites tensions.

Cette première étape peut être réalisée dès la mise en route de la pile ou après rodage de celle-ci. Dans le cadre de cet exemple, les mesures de tension électrique sont faites après rodage du coeur de pile 10. Le rodage peut être effectué pendant 8 heures dans les conditions suivantes. Les combustibles, respectivement l'oxygène et l'hydrogène, sont introduits à une pression de 2 bars absolus et à une température de 70°C dans les canaux 46 et 56 respectivement. La valeur $\lambda$, rapport stoechiométrique des gaz, est de 1,5. L'intensité surfacique de la cellule est de 0,5 A/cm$^2$. Le rodage dans ces conditions permet d'assurer une humidification optimale de la membrane avant les premières mesures de tension sur la plaque de distribution 40 ou 50. La pile a alors une surface active de l'ordre de 25 cm$^2$. Les paramètres de rodage sont les paramètres initiaux de fonctionnement de la cellule 10.

Les tensions sont mesurées à la surface d'une des plaques conductrices, par l'intermédiaire de moyens conducteurs ou sondes, mises en contact avec une zone de surface libre de ladite plaque, par exemple une plaque de distribution. Ces moyens conducteurs peuvent être reliés à la plaque de distribution de façon permanente, ils peuvent être soudés, ou collés, ou vissés, etc. Selon une alternative, les moyens conducteurs peuvent être reliés à la plaque de distribution par contact, de façon temporaire pendant la durée des mesures. Ces moyens peuvent être de nature métallique, notamment en forme de pointe. Par exemple, une première pointe P1 ou pointe conductrice, est mise en contact avec un élément de surface libre de la plaque de distribution 50 de façon arbitraire; de préférence le point de contact est proche de l'entrée du canal 56 (à quelques mm, par exemple entre 1 mm et 5 mm ou 10mm, de celle-ci), situé sur la surface 52 de la plaque de distribution 50. La pointe P1 est le potentiel de référence pour mesurer les tensions, sa position est de préférence inchangée lors du procédé.

D'autres pointes, dont le nombre n'est pas limité, peuvent être mises en contact avec d'autres éléments de surface libre de la même plaque de distribution. Sur les figures 3a, 3b et 4, 7 autres pointes (P2-P8) sont mises en contact avec des éléments de surface différents de la même plaque de distribution 50. Les points de contact peuvent être situés sur les faces perpendiculaires ou, sensiblement perpendiculaires, au plan [O; $\vec{i}$ ; $\vec{k}$ ] et de préférence, situés au plus proche du canal 56, comme représenté sur ces figures.

La pointe P1 est reliée électriquement, par l'intermédiaire par exemple d'un câble électrique E1, à un dispositif de mesure de tensions 200 (figures 3a et 3b). Ce dispositif peut comporter un voltmètre, de préférence de grande sensibilité, capable de mesurer des différences de potentiel allant jusqu'au nanovolt. Il permet de mesurer les tensions entre la pointe P1 et les autres pointes. De manière avantageuse, le voltmètre ou un dispositif d'enregistrement, par exemple un ordinateur, enregistre en fonction du temps les tensions entre la pointe P1 et les autres pointes.

Eventuellement, une pointe P0 peut être mise en contact avec une surface libre de la seconde plaque de distribution appartenant au même coeur de cellule 10, comme par exemple la plaque de distribution 40 (le point de contact de la pointe P0 sur la plaque de distribution 40 peut être au voisinage ou au niveau de l'entrée des gaz). La pointe P0 est reliée au dispositif de mesure de tension électrique précédent (figure 3a).

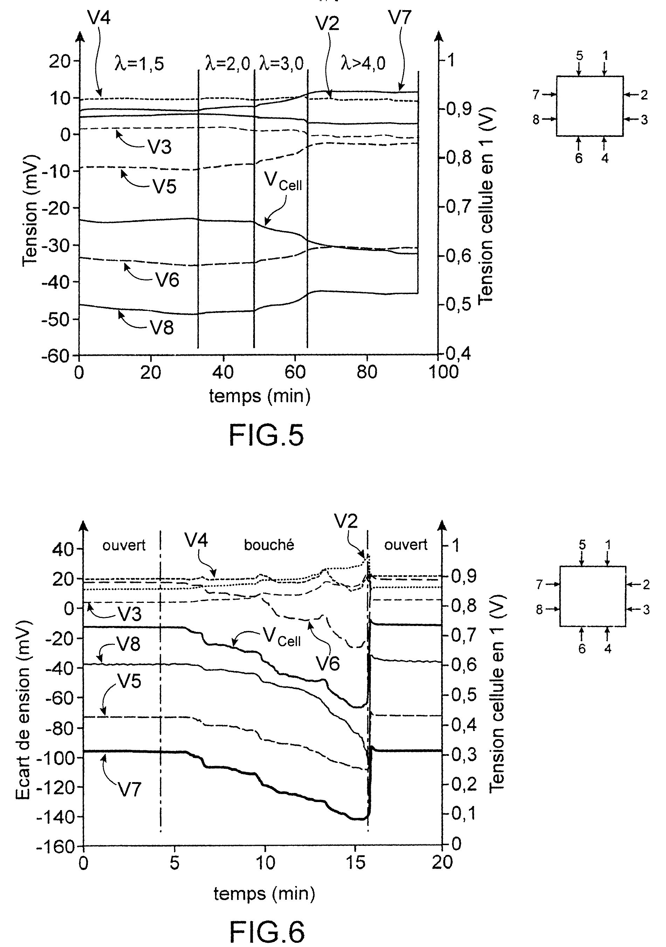

La tension entre la pointe P1 et la pointe PX est notée VX ou voie X. La tension entre P0 et P1 est notée $U_{cell}$, elle peut être une mesure de référence de la tension de la cellule 10. Les tensions mesurées sont reportées, en fonction du temps, sur la figure 5. On observe que les tensions ou tensions initiales, V2 à V8 et $U_{cell}$, sont sensiblement stables lorsque le rapport stoechiométrique de l'oxyygène $\lambda$, est de l'ordre de 1,5. Cette valeur correspond à un débit classiquement utilisé pour les piles de ce type. Lorsqu'on augmente le débit d'oxygène pour atteindre un $\lambda$ de l'ordre de 2, 3 et supérieur à 4, la tension de référence $U_{cell}$, baisse. Il en est de même pour les tensions V2 et V3 qui correspondent respectivement aux tensions mesurées entre la pointe P1 et, respectivement, les pointes P2, et P3, positionnées à proximité de l'entrée 59 du canal 56 (figure 4). Par contre, les tensions V5, V6, V7 et V8 qui correspondent respectivement aux tensions mesurées entre la pointe P1 et, respectivement, les pointes P5, P6, P7 et P8, positionnées à proximité de la sortie 70 dudit canal, augmentent. L'augmentation du débit d'oxygène dans le canal 56, pour un débit d'hydrogène constant dans le canal 46, permet l'évacuation d'une quantité d'eau plus importante, sans pour autant augmenter la quantité d'eau produite par la réaction électrochimique 2 au niveau de la cathode 30. Le flux de gaz assèche donc la membrane le long de l'entrée du canal 56, phénomène défavorable à la diffusion des ions $H^+$ à travers ladite membrane. Ainsi, dès lors que le débit d'oxygène dans le canal 56 augmente, un assèchement de la membrane 2 peut être observé. L'assèchement de la membrane 2 est par ailleurs plus prononcé dans la zone de la membrane se trouvant à proximité de l'entrée 59 du canal 56. La réaction de réduction 2 est de ce fait limitée ; le nombre de charges électriques se déplaçant vers la zone composée de la plaque de distribution 50, la couche de diffusion 35, la cathode 30 et la membrane asséchée 2, chute à proximité de cette zone. La tension électrostatique à la surface de la plaque de distribution 50, en contact avec la zone précédente, diminue également. Les mesures de tension électrique, entre la pointe de référence P1 et les pointes placées sur la plaque de distribution 50, à proximité de la membrane sèche, relatent ce phénomène par une baisse des tensions V2 et V3 (voir figure 5). La tension de référence $U_{cell}$, mesurée entre la pointe P1 et la pointe P0, diminue sensiblement de la même façon que les tensions V2 et V3 car la pointe P1 est située également près de l'entrée du canal 56. Par contre, on note le comportement inverse pour les tensions V5, V6, V7 et V8. Les pointes P5, P6, P7 et P8 sont positionnées à proximité de la sortie du canal 56. En bout de canal, le taux d'humidité du gaz réactif est plus important que lors de son introduction dans le canal. La quantité d'eau dans cette zone, pouvant être évacuée par le gaz, est donc moins importante (saturation du gaz réactif en eau). En conséquence, l'eau est souvent présente en excès dans cette partie de la cellule, généralement sous forme liquide. Or, la présence d'eau liquide à la surface de la cathode est néfaste pour la réaction de réduction 2. Donc, une valeur de $\lambda$ supérieure à 1,5 permet d'évacuer cet excès d'eau, augmentant de ce fait la surface active (non recouverte d'eau liquide) dans la zone située à proximité de la sortie du canal 56. Le nombre de charges électrostatiques augmente donc à la surface de la plaque en contact de cette zone de nouveau active. Les tensions mesurées, entre la pointe P1 et les pointes P5 à P8, augmentent en raison de ce phénomène, dit de séchage. Lorsque le débit d'oxygène est diminué pour atteindre, à nouveau, une valeur de $\lambda$ de l'ordre de 1,5, les tensions retrouvent lentement leurs valeurs initiales en raison de la réhydratation de la membrane et du noyage d'une partie de la cathode. Ceci montre le caractère réversible du phénomène de séchage.

Une ouverture, par exemple l'ouverture 70, est ensuite bouchée par une vanne de purge fermée. La pile fonctionne alors en mode « bouché ». Par conséquent, les produits de la réaction 2 ne peuvent plus être évacués de la cellule 10, dans le cas présent le produit est de l'eau. La proportion en molécules d'eau augmente alors dans le canal 56, favorisant l'hydratation de la membrane dans une zone proche de l'entrée du canal et donc la réaction 2. Les tensions V2, V3 et V4, correspondent aux pointes mises en contact de la plaque de distribution 50, dans une zone proche de l'entrée du canal. Elles augmentent car la membrane est mieux hydratée dans cette zone (figure 6). Par contre, l'eau, ne pouvant être évacuée, est présente en excès à l'autre extrémité du canal, près de la sortie bouchée. Les surfaces de la cathode, dans cette seconde partie de la pile, sont recouvertes alors d'eau et les tensions V6, V7 et V8, correspondant aux pointes mises en contact de la plaque de distribution 50, dans une zone proche de la sortie du canal, diminuent alors. Ce phénomène correspond au « noyage » de la pile. Les tensions électriques des pointes conductrices reviennent à leurs valeurs initiales lors de l'ouverture de la vanne de purge.

Les mesures de tension, entre la plaque de distribution 40 et la plaque de distribution 50, $U_{cell}$, relatent bien ces phénomènes. Pour autant, ces exemples montrent clairement qu'une seule mesure de ce type n'est pas représentative de l'état de la pile. Une mesure de ce type est une mesure relatant partiellement le fonctionnement de la pile, c'est donc une mesure insuffisante pour contrôler et optimiser une pile à combustible à membrane.

Selon l'invention, les mesures de tension électrique, réalisées sur différents éléments de surface d'une même plaque, permettent de connaître, en temps réel et localement, la répartition des tensions électrostatiques à la surface d'une plaque de distribution composant une cellule de pile à combustible. Il a ainsi pu être observé que l'assèchement de la membrane, essentiellement à proximité de l'entrée 59 du canal 56, et le noyage d'une électrode, essentiellement à proximité de l'ouverture 70 du canal 56, sont des phénomènes réversibles et non homogènes au sein d'une même cellule. Certaines zones de la cellule sont plus disposées que d'autres à ces phénomènes. Par exemple, les zones de la cellule, proches de l'entrée du canal d'alimentation en combustible, sont les premières zones à être asséchées lorsque λ à une valeur supérieure à 1,5. A l'inverse, ce sont les zones des électrodes 40 ou 50 les plus proches de la sortie du canal qui sont enclines au phénomène de noyage lorsque la pile fonctionne en mode « bouché ». Il est donc possible de détecter, de préférence précocement, l'un ou l'autre de ces phénomènes, en apportant une attention toute particulière à l'une ou l'autre de ces zones, en mesurant la variation de tension électrique entre un moyen conducteur de référence et un ou plusieurs moyens conducteurs placés sur la même plaque de distribution, sur les zones de surface proches, de préférence les plus proches possibles de la zone à surveiller, où le phénomène est susceptible de se produire.

Les mesures précédentes de tension, avantageusement en fonction du temps, peuvent donc être des marqueurs ou des indicateurs du fonctionnement de la cellule pour détecter précocement, par exemple, son noyage. Pour cela, les pointes P1, P6, P7 et P8 peuvent être disposées comme sur les figure 3a, 3b et 4, afin d'être en contact avec des éléments de surface de la plaque de distribution 50, proches de la sortie du canal 56. Une baisse des tensions V6, V7 et V8, par rapport aux tensions initiales, sera alors synonyme de la présence d'un excès d'eau dans cette partie de la cellule et du début du noyage de l'électrode 50. Les valeurs des tensions précédentes peuvent être communiquées à un opérateur ou bien à un ordinateur 400, par l'intermédiaire d'une interface électronique ou digitale 300 (figure 3b), pour que l'opérateur puisse effectuer des actions sur les paramètres de fonctionnement 500 de la pile 10 pour contrôler, localement ou globalement, le noyage de la pile. Par exemple, l'opérateur, pour contrôler ou stopper le noyage de la pile, peut effectuer une ou plusieurs des actions suivantes : augmenter le débit du combustible et/ou ouvrir et/ou augmenter la fréquence d'ouverture de la vanne de purge, et/ou augmenter la température et/ou baisser le taux d'humidification du combustible introduit dans le canal, etc. Il est possible d'automatiser le contrôle en réalisant une boucle de rétro-action qui agira sur les débits de gaz ou sur le taux d'hydratation des gaz entrants.

Selon une alternative, les mesures de tension, réalisées précédemment en courant continu, peuvent être faites en courant modulé, à différentes fréquences, de manière à déterminer l'impédance complexe locale et ainsi identifier la nature du phénomène faisant baiser la puissance de la pile. Une ou plusieurs tensions électriques peuvent être mesurées en fonction de la densité de courant dans la ou les cellules de la pile afin d'obtenir une courbe de polarisation.

Des mesures de spectrométrie d'impédance peuvent être réalisées en imposant un courant alternatif supplémentaire par rapport au courant débité par la pile. Ce courant présente de préférence une faible amplitude par rapport au courant généré par la pile de manière à ne pas perturber les équilibres électrochimiques mis en jeu.

Dans ces conditions, on peut considérer que le système reste dans un état semi-stationnaire et que la réponse courant tension est quasi linéaire. L'amplitude du courant alternatif est généralement de l'ordre de 10% par rapport au courant continu.

Pour mesurer l'impédance (ou résistance complexe), la tension aux bornes de la cellule est mesurée simultanément au signal du courant. L'impédance est alors définie par le rapport :

$$Z^* = U^*/I^*$$

où $Z^*$ est l'impédance complexe:

$$Z^* = Z' + j\,Z'',$$

$U^*$ est la tension complexe:

$$U^* = U' + j\,U'',$$

et I* est le courant complexe:

$$I^* = I' + j\,I''.$$

Différents dispositifs d'analyse des signaux de courant et de tension permettent d'obtenir directement les valeurs complexe de l'impédance: la partie réelle (Z') et la partie imaginaire (Z"). La mesure de spectroscopie s'obtient en effectuant une mesure d'impédance pour différentes fréquences d'excitation, en général de quelques dizaines de kHz à quelques dixièmes de Hz. On obtient ainsi un spectre d'impédance. Cette mesure permet de séparer les phénomènes rapides (conductions électronique et protonique) des phénomènes plus lents tels que la diffusion des gaz ou le noyage des électrodes. Ainsi, la résistance à hautes fréquences donne la valeur de la résistance de la membrane alors que la résistance de diffusion est obtenue à basses fréquences.

En général, la tension est mesurée en un seul point, au niveau des entrées de gaz des deux plaques bipolaires. Il faut noter que, ici, on effectue simultanément plusieurs mesures de tensions à différents points, de préférence « stratégiques », de la plaque bipolaire pour une variation de courant globale. Dans ces conditions, un spectre d'impédance est mesuré pour chaque point de mesure. Il est alors possible de quantifier l'évolution des différentes composantes de la chute de tension pour chaque point. Par exemple, un assèchement de la membrane en entrée de gaz se traduira par une augmentation de la résistance à hautes fréquences alors qu'un noyage en sortie de pile produira une augmentation de la résistance à basses fréquences.

Selon une variante des procédés précédents, des courbes de polarisation peuvent être mesurées à partir des différents moyens ou pointes conductrices. Les courbes de polarisation représentent l'évolution de la tension de la cellule en fonction de la densité de courant imposée entre ses plaques de distribution. Ces courbes permettent d'évaluer le comportement d'une cellule ou d'un stack en fonctionnement. La tension de cellule est généralement prise sur les plaques de distribution au niveau des entrées des canaux. Le dispositif selon l'invention permet de mesurer des courbes de polarisation à partir de différentes zones de surface avec les pointes conductrices P1 à P8 et P0. Sur la figure 7, les courbes de polarisation correspondant à la fin des canaux (V5, V7 et V8) sont beaucoup moins bonnes (tensions plus faibles) que les courbes de polarisation correspondant au début des canaux (V2, V3 et V4) en raison de l'accumulation de l'eau liquide en sortie de canal. Inversement, les courbes V2, V3 et V4 sont meilleures que la courbe standard tracée avec la tension de cellule V1 ou Ucell. Dans cet exemple, la densité de puissance maximale délivrée sur la voie 4 est augmentée de 5 % par rapport à V1 (voir figure 8) par rapport au mode de mesure classique. Ceci montre que le procédé de mesure ici proposé, permet aussi de sélectionner le ou les points de mesure les plus favorables pour obtenir, une ou des densités de puissance, la ou les plus élevées. La figure 9 montre les courbes de polarisation obtenues dans différents modes de fonctionnement: assèchement de la membrane, noyage en mode bouché et conditions optimisées. Le procédé proposé permet d'augmenter les performances de la cellule au-delà de 10 % , de préférence entre 10 et 20 %, en optimisant les paramètres de fonctionnement, comme décrit ci-dessus.

Selon une première alternative, les mesures de tension sont faites simultanément sur deux plaques conductrices composant la cellule 10, par exemple, sur la plaque de distribution 40 et 50.

Le procédé selon l'invention peut également être reproduit simultanément ou non, sur plusieurs cellules composant une pile à combustible, comme illustré sur la figure 2, afin de suivre l'évolution des tensions le long des canaux de chaque cellule et ainsi optimiser le fonctionnement de la pile à combustible comportant plusieurs cellules. Dans le cas d'un stack (association de plusieurs cellules), ce sont principalement les phénomènes intervenant à la cathode (noyage des électrodes, limitation de la diffusion du gaz par perte de charge dans les canaux, assèchement de la membrane...) qui limitent la tension de la plaque bipolaire. Dans ce cas, les mesures de tension seront prises en référence avec la circulation du gaz à la cathode (entrée et sortie). Ainsi, l'optimisation des réglages de fonctionnement du stack sera réalisée en modifiant iniquement les paramètres concernant la cathode (débit de gaz, humidification, ...).

L'invention concerne également une pile ou un dispositif tel que décrit précédement, dans lequel une autre plaque ou tige(non représentée sur les figures), conductrice, peut être placée ou interposée, entre la membrane 2 et la plaque de distribution 40 ou 50 lors de la fabrication de la cellule 10Une pile selon l'invention peut être composée par au moins deux moyens de fixation ou de connexion électrique, par exemple P1 et P2, situés sur au moins une même première plaque conductrice ou semiconductrice, par exemple la plaque de distribution 50 (figure 3b). Ces moyens de fixation peuvent être des connecteurs électriques fixés de manière permanente sur la plaque de distribution 50, par l'intermédiaire de trous réalisés sur les côtés de la plaque 50.. Pour les plaques bipolaires épaisses, les prises de tensions peuvent être effectuées en réalisant des trous dans l'épaisseur de la plaque bipolaire et en enfichant des fiches types microbananes ou microconnecteurs. Pour les plaques métalliques plus minces, il est possible de réaliser directement le soudage des fils sur la plaque. Le collage est plus délicat car il ne garantit pas un bon contact électrique. Les moyens de fixation sont de préférence placés au plus près du canal ou des canaux de distribution.

Le dispositif peut en outre comporter deux moyens E1 et E2 permettant de relier électriquement les moyens de fixation P1 et P2 au dispositif 200. Ces moyens peuvent être des câbles électriques, éventuellement attachés de façon permanente; ou bien de façon non permanente par vissage, ou clipsage, ou emboîtage, ou autre dans lesdits moyens de fixation. Les valeurs de tension électrique mesurées entre lesdits moyens de fixation par le dispositif 200 peuvent être communiquées par des moyens formant une interface électronique 300, à un opérateur ou un ordinateur 400. Des actions peuvent alors être effectuées, sur au moins un des paramètres de fonctionnement de la pile 10, en fonction des valeurs des tensions mesurées.

Une baisse de la tension mesurée près de l'entrée de gaz indique un assèchement de la membrane dû à l'effet du débit de gaz. On cherche alors à hydrater la membrane. Cela peut se faire en augmentant le taux d'humidité relative du gaz et/ou en diminuant le débit de gaz pour moins assécher. Inversement, une baisse de la tension en sortie de gaz indique un début de noyage des électrodes. On cherche alors à augmenter le débit de gaz et/ou à effectuer une purge en ouvrant à complètement la vanne de sortie de gaz, par exemple pendant quelques secondes, de manière à faire un effet de chasse.

Lorsque la pile est composée par plus de deux cellules, plus de trois moyens de fixation ou de connexion électrique peuvent être fixés sur deux plaques conductrices appartenant à la même cellule ou bien à deux cellules différentes.

Les moyens de connexion électrique peuvent être connectés à un dispositif 200 de mesure de tension électrique continue ou bien modulé à différentes fréquences. Le dispositif 200 peut être substitué par un dispositif de mesure de tension en fonction de la densité de courant dans la ou les cellules.

Les procédés, ainsi que les dispositifs, selon l'invention, permettent de suivre en temps en réel et localement l'état de fonctionnement d'une pile à combustible à membrane, à partir des mesures de tension électrique sur les surfaces libres d'une ou de plusieurs plaques de distribution composant la pile. Les mesures de tension sont non invasives car réalisées sur les parties accessibles des plaques de la pile. A partir de ces mesures, un opérateur, ou un dispositif automatique, peut adapter les paramètres de fonctionnement de la pile pour augmenter la puissance électrique produite.

**Revendications**

1. Procédé de contrôle du fonctionnement d'une pile à combustible comportant au moins une membrane (2), comportant les étapes suivantes :

    • mise en contact d'au moins deux moyens conducteurs (P1,P2), avec deux éléments de surface différents d'une même première plaque conductrice, ladite plaque pouvant être une plaque de distribution (50) appartenant à une première cellule (10),
    • mesure d'une ou plusieurs tensions électriques, entre lesdits moyens conducteurs, reliés électriquement à un dispositif de mesure de tension électrique (200).

2. Procédé de contrôle du fonctionnement d'une pile à combustible selon la revendication précédente, dans lequel la valeur ou bien les valeurs des tensions électriques mesurées sont communiquées par des moyens formant une interface électronique (300).

3. Procédé de contrôle du fonctionnement d'une pile à combustible selon la revendication 1 ou 2, dans lequel un premier moyen conducteur (P1) est maintenu en contact avec un premier élément de surface de la première plaque (50), pendant qu'un second moyen conducteur (P2) est mis en contact successivement avec plusieurs autres éléments de surface de la même première plaque, différents du premier élément de surface, une mesure étant réalisée pour chaque contact du second moyen conducteur avec chacun des autres éléments de surface.

4. Procédé de contrôle du fonctionnement d'une pile à combustible selon la revendication 1 ou 2, dans lequel au moins 3 moyens conducteurs sont mis en contact d'au moins 3 éléments de surface différents de la première plaque, les mesures de tensions électriques étant réalisées entre un desdits moyens conducteurs et chacun des autres moyens conducteurs.

5. Procédé de contrôle du fonctionnement d'une pile à combustible selon l'une des revendications précédentes comportant en outre des étapes de :

    • mise en contact d'au moins deux moyens conducteurs, avec deux éléments de surface différents d'une même deuxième plaque conductrice ou semiconductrice, ladite seconde plaque pouvant être une plaque de distribution appartenant à la première cellule ou à une autre cellule, mesure d'une ou plusieurs tensions électriques, entre lesdits moyens conducteurs, reliés électriquement à un dispositif de mesure de tension électrique.

**6.** Procédé de contrôle du fonctionnement d'une pile à combustible selon la revendication 5, les mesures de tension électrique sur la première et la seconde plaque conductrices étant réalisées simultanément ou non.

**7.** Procédé de contrôle du fonctionnement d'une pile à combustible selon l'une des revendications précédentes, dans lequel lesdits moyens conducteurs sont placés au plus près du ou des canaux de distribution et/ou de récupération.

**8.** Procédé de contrôle du fonctionnement d'une pile à combustible selon l'une des revendications précédentes, dans lequel les mesures de tension sont réalisées en courant continue et/ou en en courant modulé à différentes fréquences.

**9.** Procédé de contrôle du fonctionnement d'une pile à combustible selon l'une des revendications 1 à 7, dans lequel la ou les tensions sont mesurées en fonction de la densité de courant dans la ou les cellules de la pile.

**10.** Procédé de contrôle du fonctionnement d'une pile à combustible selon l'une des revendications précédentes, dans lequel, en fonction d'une ou de plusieurs mesures de tension, on modifie au moins un paramètre de fonctionnement de la pile, pour augmenter la puissance de ladite pile.

**11.** Dispositif de contrôle du fonctionnement d'une pile à combustible, comportant au moins une cellule (10), comportant une membrane (2), deux électrodes (20,30), deux plaques de distribution (40,50) avec au moins sur une de leurs faces un canal de distribution des gaz combustibles et/ou un canal de récupération des produits des réactions électrochimiques réalisées dans la cellule, et au moins une première plaque conductrice qui peut éventuellement être une ou lesdites plaques de distribution; au moins deux premiers moyens conducteurs (P1,P2) étant en contact avec deux éléments de surface différents de la même première plaque (50) conductrice.

**12.** Dispositif de contrôle du fonctionnement d'une pile à combustible selon la revendication 11, dans lequel lesdits moyens conducteurs sont reliés électriquement à un dispositif de mesure de tension (200) pour mesurer une ou plusieurs tensions entre lesdits moyens conducteurs.

**13.** Dispositif de contrôle du fonctionnement d'une pile à combustible selon la revendication 12, dans lequel les tensions électriques mesurées sont communiquées par des moyens (300) formant une interface électronique.

**14.** Dispositif de contrôle du fonctionnement d'une pile à combustible selon la revendication 11 à 13, dans lequel au moins deux deuxièmes moyens conducteurs sont en contact avec deux éléments de surface différents d'une même seconde plaque conductrice appartenant à la pile.

**15.** Dispositif de contrôle du fonctionnement d'une pile à combustible selon la revendication 14, dans lequel lesdits deuxièmes moyens conducteurs sont reliés électriquement à un dispositif de mesure de tension pour mesurer une ou plusieurs tensions entre lesdits deuxièmes moyens conducteurs.

**16.** Dispositif de contrôle du fonctionnement d'une pile à combustible selon l'une des revendications 11 à 15, dans lequel lesdits premiers moyens conducteurs et/ou lesdits deuxièmes moyens conducteurs sont placés au plus près du ou des canaux de distribution et/ou de récupération.

**17.** Dispositif de contrôle du fonctionnement d'une pile à combustible selon la revendication 11 à 16, comportant en outre des moyens de mesure de tension en courant continu et/ou en en courant modulé à différentes fréquences (200).

**18.** Dispositif de contrôle du fonctionnement d'une pile à combustible selon la revendication 11 à 17, comportant en outre des moyens (500) pour modifier au moins un paramètre de fonctionnement de la pile, pour augmenter la puissance de ladite pile, en fonction d'une ou de plusieurs tensions mesurées.

FIG.1

FIG.2

FIG.3a

FIG.3b

FIG.4

FIG.5

FIG.6

FIG.7

FIG.8

FIG.9

Europäisches
Patentamt

European
Patent Office

Office européen
des brevets

**RAPPORT DE RECHERCHE EUROPEENNE**

Numéro de la demande

EP 16 15 2993

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 2 017 630 A2 (DEUTSCH ZENTR LUFT & RAUMFAHRT [DE]) 21 janvier 2009 (2009-01-21) * figures 2-4 * * alinéas [0022] - [0025], [0040], [0057], [0060], [0105], [0119], [0136] * | 1-18 | INV. H01M8/04 ADD. H01M8/10 |
| | ----- | | |
| X | DE 10 2008 023183 A1 (FORSCHUNGSZENTRUM JUELICH GMBH [DE]) 12 novembre 2009 (2009-11-12) * revendications 1,2,4 * * alinéa [0008] * ----- | 1-3,6,8, 11-13,17 | |

**DOMAINES TECHNIQUES RECHERCHES (IPC)**

H01M

Le présent rapport a été établi pour toutes les revendications

| Lieu de la recherche | Date d'achèvement de la recherche | Examinateur |
|---|---|---|
| Munich | 30 mai 2016 | Jacquinot, Patrick |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 15 2993

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-05-2016

| Document brevet cité au rapport de recherche | Date de publication | Membre(s) de la famille de brevet(s) | Date de publication |
|---|---|---|---|
| EP 2017630 A2 | 21-01-2009 | DE 102007034699 A1<br>EP 2017630 A2 | 22-01-2009<br>21-01-2009 |
| DE 102008023183 A1 | 12-11-2009 | AT 545163 T<br>DE 102008023183 A1<br>EP 2274783 A1<br>WO 2009138051 A1 | 15-02-2012<br>12-11-2009<br>19-01-2011<br>19-11-2009 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040091759 A
- US 20050287402 A
- US 20060074574 A
- US 20060083961 A
- US 20100286939 A
- US 20140186734 A
- US 6762587 B
- US 20060051628 A
- US 20070279051 A
- EP 1755188 A

**Littérature non-brevet citée dans la description**

- **M.G. SANTARELLI ; M.F. TORCHIO.** Exprimental analysis of the effects of the operating variables on the performance of a single PEMFC. *Energy Conversion and Management,* 2007, vol. 48, 40-51
- **W. DAI ; H. WANG ; X. YUAN ; J. J. MARTIN ; D. YANG ; J. QIAO ; J. MA.** A review on water balance in the membrane electrode assembly of proton exchange membrane fuel cells. *Int J Hydrogen Energy,* 2009, vol. 32, 9461-9478